## Europäisches Patentamt

## European Patent Office

## Office européen des brevets

(11) Veröffentlichungsnummer: **0 324 429 B1**

# EUROPÄISCHE PATENTSCHRIFT

(45) Veröffentlichungstag der Patentschrift: **07.10.92**

(51) Int. Cl.5: **G01N 3/30**

(21) Anmeldenummer: **89100329.5**

(22) Anmeldetag: **10.01.89**

(54) **Instrumentierte Hammerfinne für eine dynamische Werkstoffprüfmaschine.**

(30) Priorität: **15.01.88 DE 8800407 U**
**17.09.88 DE 3831689**

(43) Veröffentlichungstag der Anmeldung:
**19.07.89 Patentblatt 89/29**

(45) Bekanntmachung des Hinweises auf die
Patenterteilung:
**07.10.92 Patentblatt 92/41**

(84) Benannte Vertragsstaaten:
**AT BE CH DE ES FR GB GR IT LI LU NL SE**

(56) Entgegenhaltungen:
**EP-A- 0 141 013**
**DE-U- 8 710 633**

**REPORT, Nr. 6993, 16. Januar 1970, Naval
Research Laboratory, Washington, DC, US;
L.A. COOLEY et al.: "Vertical drop-weight
machine for conducting drop-weight N.D.T.,
drop-weight tear and dynamic tear tests"**

(73) Patentinhaber: **AMSLER Otto Wolpert-Werke
GmbH
Industriestrasse 19
W-6700 Ludwigshafen/Rh.(DE)**

(72) Erfinder: **Kalthoff, J.F. Dr.-Ing.
Weidengrund 36
W-4630 Bochum 1(DE)**
Erfinder: **Achterfeldt, Klaus
Hülsenbusch 19
W-5620 Velbert 1(DE)**

(74) Vertreter: **Fischer, Wolf-Dieter, Dipl.-Ing.
Patentanwälte Dipl.-Ing. A.H. Fischer
Dipl.-Ing. W.D. Fischer Kurfürstenstrasse 32
W-6700 Ludwigshafen/Rhein(DE)**

**Beschreibung**

Die Erfindung betrifft eine instrumentierte Hammerfinne für eine dynamische Werkstoffprüfmaschine, nämlich ein Pendelschlagwerk, eine Fallgewichtsanlage oder eine Schnellzerreißmaschine zur Messung kleiner Schlagarbeiten und/oder Schlagkräften an Proben mit einer schnellbewegten Finne, auf der wenigstens ein Dehnungsmeßstreifen angebracht ist.

Als Konstruktionswerkstoff werden Stähle in bestimmten Anwendungsbereichen zunehmend durch andere Materialien wie Kunststoffe, Keramiken und dergleichen ersetzt. Während für Stähle Prüfverfahren zur Charakterisierung der Festigkeitseigenschaften bei unterschiedlichsten Beanspruchungsbedingungen seit langem bekannt sind und in der Praxis erfolgreich eingesetzt werden, liegen entsprechende Verfahren für diese Ersatzwerkstoffe in vielen Fällen noch nicht vor. In Verbindung mit üblichen Pendelschlagwerken, wie sie zur Untersuchung von Stahl-Charpy-Proben verwendet werden, wobei Energieinhalte im Bereich von 150 J, 300 J und 750 J zugrundegelegt werden, können unter Verwendung instrumentierter Finnen Kraft-Zeit-Verläufe an genormten Probekörpern erstellt werden, aus deren Verhalten auf Eigenschaften der entsprechenden Materialien unter den herrschenden Schlagbedingungen geschlossen werden kann. Die Instrumentierung der Pendelschlagwerke ist so ausgeführt, daß entweder Folien-Dehnungsmeßstreifen oder Piezo-Quarze im Bereich der Kraftmessung zur Anwendung kommen. Bei den bekannten Schlagwerken ist keine Möglichkeit gegeben, Proben mit sehr geringen Schlagarbeiten zu testen. Dies gilt auch im wesentlichen für Fallgewichtsanlagen und Schnellzerreißmaschinen.

Der Erfindung liegt die Aufgabe zugrunde, eine instrumentierte Hammerfinne für eine dynamische Werkstoffprüfmaschine vorzuschlagen, die für Materialien mit extrem niedrigen Schlagarbeiten geeignet ist und die Messung bruchmechanischer Schlagfestigkeitswerte erlaubt.

Diese Aufgabe wird nach der Erfindung dadurch gelöst, daß eine Hammerfinne, bestehend aus einem Material, vorgesehen ist, dessen Elastizitätsmodul gegenüber einer bei der Untersuchung von Stahl-Charpy-Proben verwendeten Hammerfinne aus Stahl einen geringeren Wert bei linearelastischem Verhalten aufweist.

Vorteilhaft besteht die Hammerfinne aus Leichtmetallen wie Titan, Aluminium, Magnesium oder dergleichen oder deren Legierungen.

Vorteilhaft besteht die Hammerfinne aus einem Kunststoff, wie Polycarbonat, Äthoxylinharz, Epoxidharz oder dergleichen.

Eine vorteilhafte Ausführungsform zur Erhöhung der Haltbarkeit und zur Verschleißminimierung im betrieblichen Einsatz sieht vor, daß die Spitze der Hammerfinne aus einem höherfesten bzw. höherzähen Material, z.B. Stahl besteht (Compoundfinne),oder daß bei Finnen aus mehrkomponentigen Kunststoffen die Eigenschaften des Kunststoffs wie Härte, Zähigkeit und Festigkeit durch Anpassung der Mischungsverhältnisse in weiten Grenzen einstellbar sind.

Es ist vorteilhaft, daß das Material der Hammerfinne eine geringe Wärmeleitfähigkeit aufweist bzw. die Finne mit einer Wärmeschutzfolie versehen ist.

Es wird weiterhin vorgeschlagen, daß diese über eine Zusatzvorrichtung, z.B. eine kontinuierlich vorspannbare Feder belastet und mit einer spannungsoptischen Einrichtung geeicht wird.

Die Erfindung bringt den Vorteil, daß die Herstellung der Finne aus Materialien mit einem geringen Elastizitätsmodul für kleine Kräfte große Dehnungen hervorrufen und somit die Kräfte wegen dieser Dehnungen mit herkömmlichen Dehnungsmeßstreifen und elektronischen Meßketten hinreichend genau gemessen werden können.

Die Finne kann bei Prüfmaschinen mit beliebigen Energieinhalten eingesetzt werden. Es hat den Vorteil, daß an Prüfmaschinen mit großen Energieinhalten auch kleine Schlagarbeiten gemessen werden können. Darüberhinaus bietet die Verwendung von dynamischen Prüfmaschinen mit großen Energieinhalten den Vorteil, daß sich während des Schlagvorganges die Schlagenergie des Hammers und damit seine Geschwindigkeit praktisch nicht ändert. Durch geeignete Wahl der Ausgangsenergie des Hammers zu der von der Probe verbrauchten Schlagarbeit kann sichergestellt werden, daß innerhalb der Grenzen der DIN-Norm die Geschwindigkeit des Schlaghammers während des Schlagvorganges konstant ist, und damit die Durchbiegung der Probe streng linear mit der Zeit zunimmt und zwar mit der Geschwindigkeit des Hammers als Proportionalitätsfaktor, d.h.

$$s = v_0 \times t$$

wobei $v_0$ die maximale Geschwindigkeit des Hammers ist,
t die Zeit, gemessen von der Berührung der Probe an und
s die Durchbiegung der Probe.

Es entfällt damit die nach dem DVM-Merkblatt 001 zur Ermittlung der Schlagarbeit E aus dem Produkt von Kraft und Weg zunächst erforderliche Bestimmung des Weges s aus dem Kraft-Zeit-Signal. Insgesamt ergibt sich damit bei der Energieermittlung eine dreimalige Integration des Kraftsignals. Die von der Probe aufgenommene Energie kann nunmehr aus dem gemessenen Kraftsignal und dem streng linearen Weg-Zeit-Verlauf durch einmalige Integration ermittelt werden. Die Genauigkeit der Energiebestimmung ist damit prinzipiell genauer als nach der üblichen Prozedur, wie sie im DVM-Merkblatt angegeben ist.

Es ist von großem Vorteil, daß für die verschiedenen Werkstoffgruppen und Probentypen, wie ungekerbte, gekerbte oder angerissene Proben, die unterschiedliche Schlagkräfte und Schlagarbeiten aufweisen, eine jeweils in seinen Materialeigenschaften optimal angepaßte Finne verwendet werden kann. Zur Erhöhung der Widerstandsfähigkeit der Finne gegen Bruch können Compound-Finnen verwendet werden, bei denen die Spitze der Finne aus einem anderen (höherfesten bzw. höherzähen) Material als die Finne gefertigt werden, wobei die Finnenspitze ohne Luftspalt, z.B. durch Kleben mit der Finne verbunden ist. Bei Finnen aus mehrkomponentigen Kunststoffen sind die Eigenschaften des Kunststoffs wie Härte, Zähigkeit und Festigkeit durch Anpassung der Mischungsverhältnisse in weiten Grenzen einstellbar. Für Tests bei erhöhten Prüftemperaturen lassen sich Maßnahmen treffen, die das Aufwärmen der Finne während der kurzen Zeit des Schlagvorganges so gering halten, daß Schlagversuche auch bei hohen Temperaturen möglich sind.

Bei der Verwendung sehr empfindlicher Finnen ergibt sich für die vorgenannten Bedingungen ein zusätzliches einfaches Eichverfahren der Finne bei Pendelschlagwerken. Der Hammer wird um 90 Grad ausgelenkt und über die Finne von einer speziellen Halterung unterstützt. Die auf die Finne wirkende Kraft ist durch das bekannte Gewicht des Hammers und der Stoßmittelpunkt- und Schwerpunktlage gegeben. Bei Fallgewichtsanlagen wird die Fallgewichtsmasse über die Finne abgestützt. Ein Vergleich des jeweiligen Hammergewichts mit dem Ausgangsignal der Dehnungsmeßstreifen-Brückenschaltung liefert die Eichung.

Bei der Verwendung von Finnenmaterialien, die spannungsoptisch aktiv sind, beispielsweise Äthoxylinharzen, Expoxidharzen und dergleichen (Araldit B) ist die Möglichkeit einer zusätzlichen spannungsoptischen Eichung der Finne gegeben. Hierbei wird die Finne in der dynamischen Werkstoffprüfmaschine mit einer Zusatzvorrichtung belastet, wobei eine Lastmeßzelle nicht erforderlich ist. Mit einer zusätzlichen spannungsoptischen Meßapparatur, z.B. einem Polariskop, werden in dem keilförmigen Bereich oder in einem Bereich konstanter Dicke der Finne, die bis zu der eingestellten Endlast aufgetretenen Isochromaten registriert. Unter Verwendung der bekannten spannungsoptischen Beziehungen, wird die auf die Finne wirkende Kraft ermittelt und zur Eichung des Ausgangssignals der Dehnungsmeßstreifen-Brückenschaltung verwendet.

Die Erfindung wird in der nachfolgenden Beschreibung anhand von in den Zeichnungen dargestellten Ausführungsbeispielen näher erläutert.

Es zeigen,

Fig. 1 die Seitenansicht eines instrumentierten Pendelschlagwerks,

Fig. 2 den Hammer des Pendelschlagwerks in vergrößerter Ansicht,

Fig. 3 eine Seitenansicht von Fig. 2,

Fig. 4 eine Ansicht einer Fallgewichtsanlage,

Fig. 5 eine Ansicht einer Schnellzerreißmaschine und

Fig. 6 zwei Ausführungsbeispiele für die Gestaltung der Finnenspitze.

Das Pendelschlagwerk weist ein Gestell 1 auf, das zur Lagerung bzw. Befestigung der Anbauteile, wie der Auslösevorrichtung 5, der Pendelstange 2, der Lagerung 3 sowie des Widerlagerpaares 6 dient. An dem Widerlagerpaar 6 ist die Probe 7 in einer definierten Positionierung angeordnet. An der Pendelstange 2 ist der Hammer 4 mit seinen Bauteilen angebracht.

Der Versuchsablauf wird so realisiert, daß die aus der Pendelstange 2 und em Hammer 4 bestehende Einheit von der Auslösevorrichtung 5 in einem bestimmten Auslenkwinkel zur Verbindungslinie zwischen der Lagerung 3 und der Probe 7 gehalten wird. Durch Auslösen der Vorrichtung 5 schwingt die Einheit aus den Teilen 2 und 4 gegen die Probe 7 und zerschlägt diese.

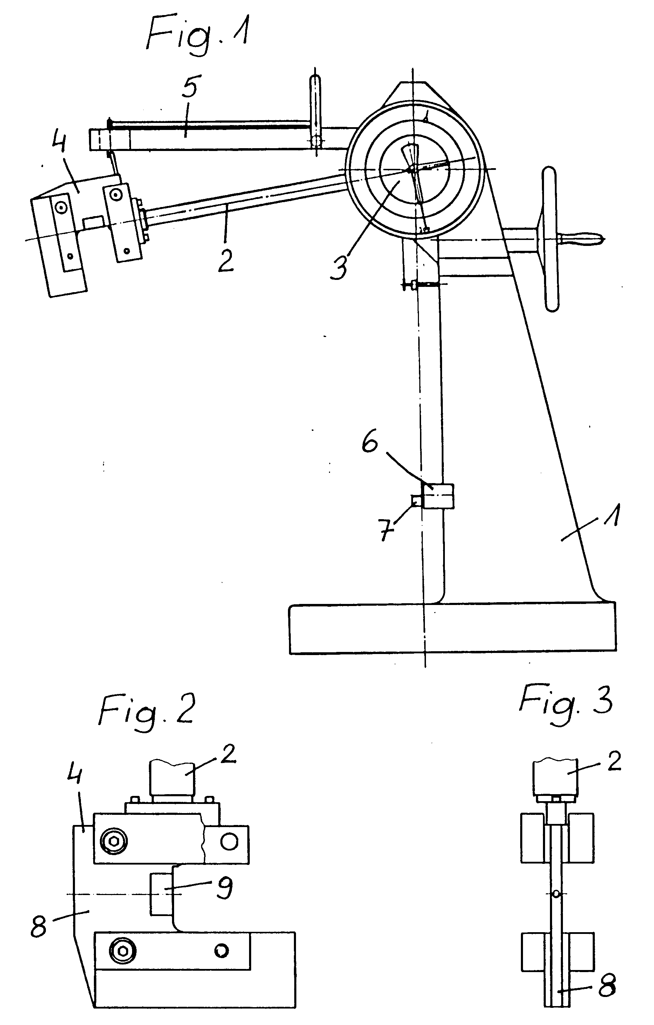

Der in den Figuren 2 und 3 dargestellte Hammer weist im wesentlichen die übliche Form auf, wobei der Hammerblock 8 im wesentlichen eine U-Form aufweist. Zwischen den beiden parallelen Schenkeln befindet sich die Hammerfinne 9, wobei der Hammerblock aus Stahl gefertigt ist, während die Hammerfinne 9 erfindungsgemäß aus einem Material besteht, das den jeweils erforderlichen geringeren Elastizitätsmodul aufweist.

An der Hammerfinne 9 ist wenigstens ein Dehnungsmeßstreifen vorgesehen. Weitere Kompensations-Dehnungsmeßstreifen befinden sich außerhalb möglicher Schwingungseinflüsse auf einer unbelasteten Fläche zum Temperaturausgleich. Durch Verwendung von Halbleiter-Dehnungsmeßstreifen anstelle von Folien-Dehungsmeßstreifen kann der Einsatzbereich weiter auf kleinere Kräfte ausgedehnt werden.

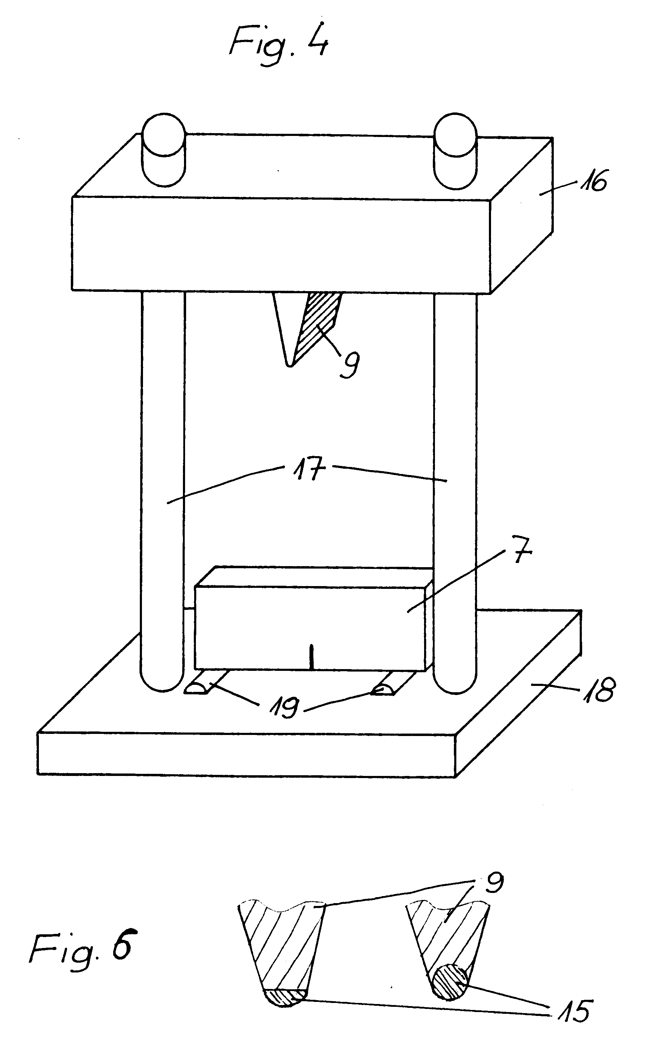

Die in Figur 4 dargestellte Fallgewichtsanlage weist eine Fallmasse 16 auf, die an zwei Säulen 17 geführt ist. An dieser Fallmasse 16 befindet sich die Finne 9. während an einer Bodenplatte 18, an Auflagern 19 abgestützt, die Probe 7 angeordnet ist.

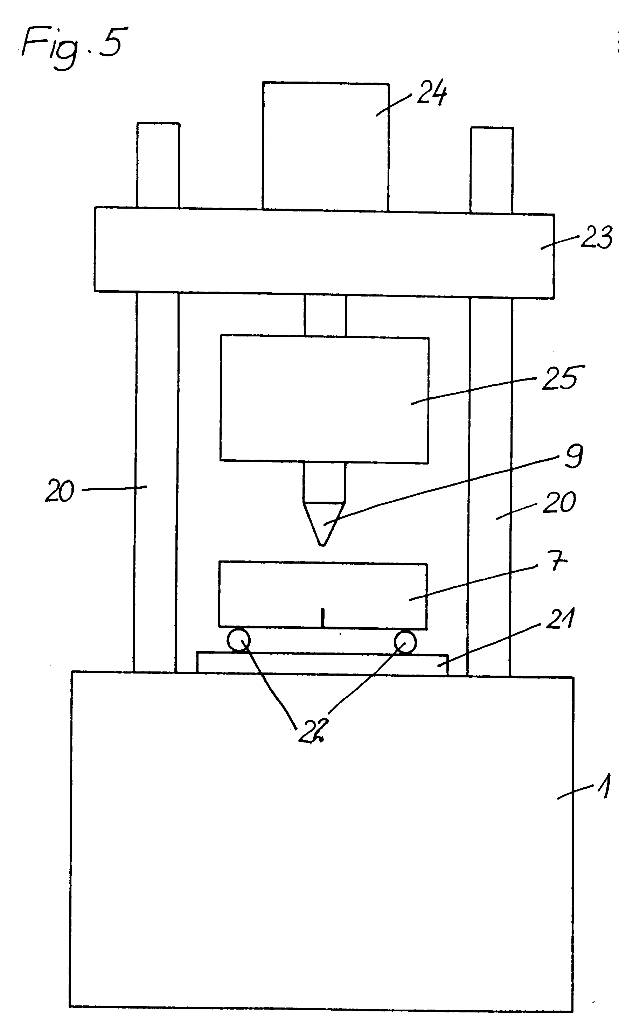

Bei der in Figur 5 dargestellten Schnellzerreißmaschine sind an einem Gestell 1 vertikale Säulen 20 angeordnet, wobei auf dem Gestell 1 auf einer Platte 21 über Auflager 22 die Probe 7 angebracht ist. Oberhalb der Probe 7 ist an einem Querhaupt 23 ein Belastungszylinder 24 gehalten, wobei unterhalb des Querhauptes eine Vorlaufstrecke 25 und die Finne 9 vorgesehen ist.

Die Figur 6 zeigt eine Möglichkeit zur Erhöhung der Widerstandsfähigkeit der Finne gegen Bruch, wobei die Finnenspitze 15 beispielsweise aus Stahl bestehen kann, während die Finne 9 aus dem Material mit einem entsprechend geringeren Elastizitätsmodul besteht. Die Spitze 15 kann hierbei durch Kleben mit der Finne 9 verbunden werden. Dadurch erhält die Finne eine hinreichend hohe Härte, Festigkeit und Zähigkeit, so daß im Dauertest beim betrieblichen Zerschlagen von Proben die Finne 9 selbst keinen Schaden nimmt.

## Patentansprüche

1. Instrumentierte Hammerfinne für eine dynamische Werkstoffprüfmaschine, nämlich ein Pendelschlagwerk, eine Fallgewichtsanlage oder eine Schnellzerreißmaschine zur Messung kleiner Schlagarbeiten und/oder Schlagkräfte an Proben mit einer schnellbewegten Finne, auf der wenigstens eine Dehnungsmeßstreifen angebracht ist, dadurch gekennzeichnet, daß eine Hammerfinne (9) bestehend aus einem Material, vorgesehen ist, dessen Elastizitätsmodul gegenüber einer bei der Untersuchung von Stahl-Charpy-Proben verwendeten Hammerfinne (9) aus Stahl einen geringeren Wert bei linear-elastischem Verhalten aufweist.

2. Instrumentierte Hammerfinne nach Anspruch 1, dadurch gekennzeichnet, daß diese aus Leichtmetallen wie Titan, Aluminium, Magnesium oder dergleichen oder deren Legierungen besteht.

3. Instrumentierte Hammerfinne nach Anspruch 1, dadurch gekennzeichnet, daß diese aus einem Kunststoff, wie Polycarbonat, Äthoxylinharz, Epoxidharz oder dergleichen besteht.

4. Instrumentierte Hammerfinne nach Anspruch 1 bis 3, dadurch gekennzeichnet, daß die Spitze (15) der Hammerfinne (9) aus einem höherfesten bzw. höherzähen Material, z.B. Stahl besteht.

5. Instrumentierte Hammerfinne nach Anspruch 1 bis 4, dadurch gekennzeichnet, daß das Material der Hammerfinne (9) eine geringe Wärmeleitfähigkeit aufweist bzw. die Finne (9) mit einer Wärmeschutzfolie versehen ist.

6. Instrumentierte Hammerfinne nach Anspruch 1 bis 5, dadurch gekennzeichnet, daß diese über eine Zusatzvorrichtung, z.B. eine kontinuierlich vorspannbare Feder belastet und mit einer spannungsoptischen Einrichtung geeicht wird.

## Claims

1. Instrumented hammer peen for a dynamic materials testing machine, in particular a pendulum impact testing machine, a drop-weight machine or a rapid tensile testing machine for measuring small impact energies and/or impact forces in samples having a rapidly moved peen on which at least one strain gauge is mounted, characterized in that a hammer peen (9) is provided and is of a material whereof the modulus of elasticity by comparison with a hammer peen (9) of steel, used in testing steel Charpy samples, has a smaller value with linearly elastic behaviour.

2. Instrumented hammer peen according to Claim 1, characterized in that it is of light metals such as titanium, aluminium, magnesium or the like or alloys thereof.

3. Instrumented hammer peen according to Claim 1, characterized in that it is of a plastics material, such as polycarbonate, epoxy resin or the like.

4. Instrumented hammer peen according to Claim 1 to 3, characterized in that the tip (15) of the hammer peen (9) is of a relatively high-strength or relatively tough material, e.g. steel.

5. Instrumented hammer peen according to Claim 1 to 4, characterized in that the material of the hammer peen (9) has a low capacity for heat conduction, or the peen (9) is provided with a heat-insulating foil.

6. Instrumented hammer peen according to Claim 1 to 5, characterized in that it is loaded by way of an additional apparatus, e.g. a spring which can be continuously pre-tensioned, and is calibrated using a photo-elastic apparatus.

## Revendications

1. Panne de marteau instrumentée pour une machine à essayer des matériaux dynamique, à savoir un mouton-pendule, une installation pour l'essai à la masse tombante ou une machine à éprouver la résistance à la traction rapide pour la mesure de faibles efforts et/ou forces de choc sur des éprouvettes avec une panne à mouvement rapide, sur laquelle est montée une jauge extensométrique, **caractérisée en ce** que la panne (9) du marteau est réalisée dans un matériau dont le module d'élasticité présente, par rapport à une panne de marteau (9) en acier utilisée pour l'étude d'éprouvettes d'acier pour l'essai Charpy, une valeur plus faible pour un comportement élastique linéaire.

2. Panne de marteau instrumentée selon la revendication 1, caractérisée en ce qu'elle est constituée de métaux, légers tels que du titane, de l'aluminium, du magnésium ou analogues ou de leurs alliages.

3. Panne de marteau instrumentée selon la revendication 1, caractérisée en ce qu'elle est constituée d'une matière plastique telle que du polycarbonate, de l'éthoxyline et de la résine époxyde ou analogues.

4. Panne de marteau instrumentée selon l'une des revendications 1 à 3, caractérisée en ce que la pointe (15) de la panne de marteau (9) est réalisée à partir d'un matériau à résistance ou ténacité plus élevée, par exemple en acier.

5. Panne de marteau instrumentée selon l'une des revendications 1 à 4, caractérisée en ce que le matériau de la panne de marteau (9) présente une faible conductibilité thermique ou que la panne (9) est revêtue d'une feuille calorifuge.

6. Panne de marteau instrumentée selon l'une des revendications 1 à 5, caractérisée en ce qu'elle est chargée par l'intermédiaire d'un dispositif additionnel, par exemple un ressort pouvant être précontraint en continu, et qu'elle est étalonnée au moyen d'un dispositif photo-élastique.

Fig. 1

Fig. 2

Fig. 3

Fig. 4

Fig. 6

Fig.5